# EUROPÄISCHE PATENTANMELDUNG

(11) **EP 2 523 245 A1**
(43) Veröffentlichungstag der Anmeldung: **14.11.2012**
(21) Anmeldenummer: 12450024.0
(22) Anmeldetag: 26.04.2012
(51) Int. Cl.: H01M 8/18, H01M 8/04, H01M 8/24

(54) **Verfahren zum Betreiben eines reversiblen Brennstoffzellensystems mit Metallhydridspeicher, reversibles Brennstoffzellensystem sowie Verwendung hierfür**

(30) Priorität: 09.05.2011 AT 6432011
(71) Anmelder: FOTEC Forschungs- und Technologietransfer GmbH, 2700 Wiener Neustadt (AT)
(72) Erfinder: Keding, Marcus, 1050 Wien (AT); Reissner, Alexander, 1200 Wien (AT)
(74) Vertreter: Miksovsky, Alexander

(57) **Zusammenfassung**

Bei einem Verfahren zum Betreiben eines reversiblen Brennstoffzellensystems (21), bei welchem in einem Elektrolyseur (22) Wasser in Wasserstoff und Sauerstoff gespalten und in getrennten Speichern (25, 26) gespeichert wird und Wasserstoff und Sauerstoff in einer Brennstoffzelle (27) unter Entstehung von Wasser in elektrische Energie (28) umgewandelt wird, ist vorgesehen, dass der Wasserstoff in einem Metallhydridspeicher (26) gespeichert wird.

Darüber hinaus wird ein derartiges reversibles Brennstoffzellensystem (21) unter Einsatz eines Metallhydridspeichers (26) zur Speicherung von Wasserstoff als auch eine Verwendung eines derartigen Verfahrens und reversiblen Brennstoffzellensystems beispielsweise in einem Satelliten oder Raumfahrzeug vorgeschlagen, um die erfindungsgemäß erzielbaren Vorteile im Hinblick auf einen verringerten Platzbedarf und eine Optimierung der Nutzung der anfallenden thermischen Energie zur Verfügung zu stellen.

## Beschreibung

Die vorliegende Erfindung bezieht sich auf ein Verfahren zum Betreiben eines reversiblen Brennstoffzellensystems, bei welchem in einem Elektrolyseur Wasser in Wasserstoff und Sauerstoff gespalten und in getrennten Speichern gespeichert wird und Wasserstoff und Sauerstoff in einer Brennstoffzelle unter Entstehung von Wasser in elektrische Energie umgewandelt wird. Die vorliegende Erfindung bezieht sich darüber hinaus auf ein reversibles Brennstoffzellensystem, bestehend aus einer Brennstoffzelle, einem Elektrolyseur und einem Speicher für Sauerstoff und Wasserstoff, sowie auf eine Verwendung eines derartigen Verfahrens oder eines derartigen reversiblen Brennstoffzellensystems.

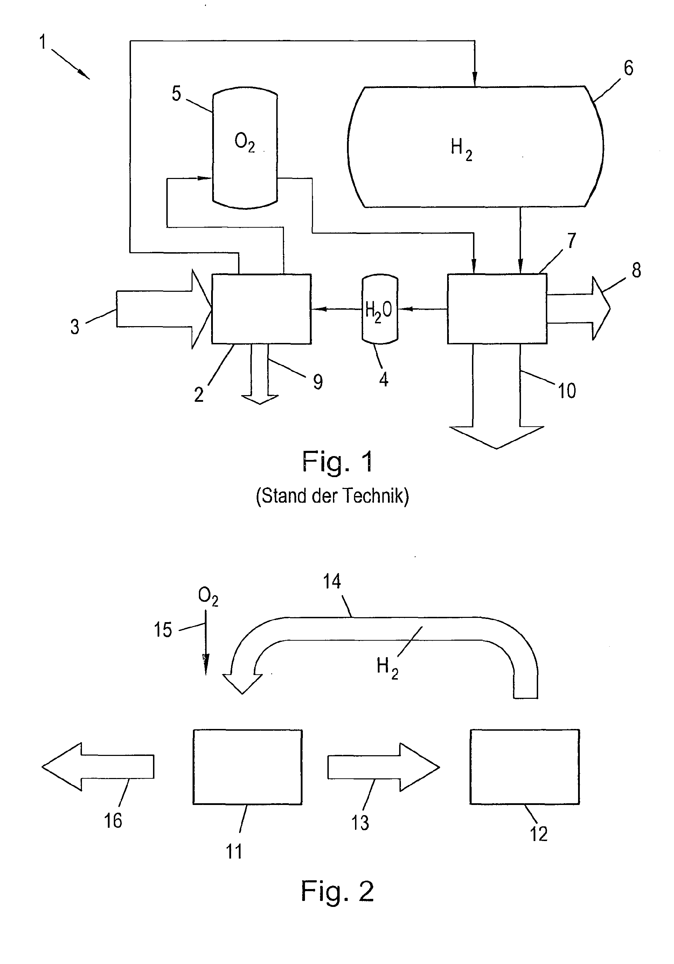

Unter einem reversiblen Brennstoffzellensystem wird allgemein die Kombination aus einer Brennstoffzelle mit einem Elektrolyseur und einem Sauerstoff- und Wasserstoff-Speichersystem verstanden, wie dies beispielsweise in Fig. 1 dargestellt ist. Ein Elektrolyseur ist eine Vorrichtung, welche für eine Zerlegung von Wasser in Wasserstoff und Sauerstoff dient. Bei dem in Fig. 1 dargestellten reversiblen Brennstoffzellensystem 1 wird gemäß dem Stand der Technik ein Elektrolyseur 2 mit externem Strom 3 versorgt, um Wasser, welches aus einem Speicher bzw. Vorratsbehälter 4 zugeführt wird, in Wasserstoff und Sauerstoff zu zerlegen bzw. zu spalten, welche in getrennten Speichern 5 und 6 in gasförmigem Zustand gespeichert werden.

Wird zu einem späteren bzw. davon unabhängigen Zeitpunkt Sauerstoff und Wasserstoff aus den Speichern bzw. Vorratsbehältern 5 und 6 einer Brennstoffzelle 7 zugeführt, so entsteht in der Brennstoffzelle 7 erneut Strom, wie dies durch 8 angedeutet ist, wobei dieser Strom einem externen Verbraucher zugeführt werden kann. Das in Fig. 1 dargestellte bekannte reversible Brennstoffzellensystem kann somit elektrischen Strom speichern und bei Bedarf ähnlich einer herkömmlichen Batterie wiederum abgeben. Bei Verwendung einer Hochtemperatur-PEM-Brennstoffzelle, einem Hochdruck-Elektrolyseur und einem entsprechenden Drucktank sowohl für Wasserstoff als auch für Sauerstoff lassen sich hierbei Batteriesysteme zur Verfügung stellen, welche kleiner, leichter und effizienter sein können als beispielsweise Li-Ionen-Batterien neuester Technologie. Derartige Systeme sind beispielsweise für Personenkraftwagen, Lastkraftwagen, Flugzeuge oder Schiffe denkbar bzw. interessant.

Nachteilig bei einem derartigen bekannten reversiblen Brennstoffzellensystem gemäß dem Stand der Technik, wie dies in Fig. 1 dargestellt ist, ist jedoch insbesondere der Platzbedarf für den Wasserstofftank, welcher beispielsweise mehr als 50 % des Gesamtvolumens eines derartigen Systems 1 darstellt. Darüber hinaus sind unter Berücksichtigung der Tatsache, dass sowohl der Elektrolyseur als auch die Brennstoffzelle bei gegenüber Raumtemperatur bzw. Umgebungstemperatur erhöhten bzw. stark erhöhten Temperaturen zur Erzielung einer optimalen Effizienz betrieben werden müssen, Wärmeverluste teilweise beträchtlich, wie dies durch 9 und 10 bei dem in Fig. 1 dargestellten System angedeutet ist. Bei einem 20 kW System können beispielsweise die Wärmeverluste des Elektrolyseurs, welcher bei Temperaturen von etwa 80 °C betrieben werden muss, etwa 300 W betragen, während Wärmeverluste der Brennstoffzelle, welche bei Temperaturen von etwa 180 °C betrieben werden muss, 7 kW übersteigen können. Für einen ordnungsgemäßen bzw. optimalen Betrieb einer derartigen Hochtemperatur-Brennstoffzelle ist somit erforderlich, dass sie beim Beladen geheizt und beim Entladen stark gekühlt wird, wodurch die Gesamteffizienz beeinträchtigt wird.

Darüber hinaus sind insbesondere bei der Herstellung des Speichers bzw. Vorratsbehälters für Wasserstoff hohe Kosten und ein hoher Aufwand zur Erfüllung sicherheitstechnischer Anforderungen eines derartigen Druckbehälters zu berücksichtigen, welcher beispielsweise mit einem Betriebsdruck von 150 bar betrieben wird. Weiters ist nachteilig, dass die Lebensdauer der Brennstoffzelle 7 stark von der Reinheit des zugeführten bzw. vorhandenen Wasserstoffs abhängt, wobei aufgrund der Tatsache, dass es sich um ein geschlossenes System handelt, gegebenenfalls vorhandene, bereits geringe unvermeidbare Verunreinigungen eine Beeinträchtigung der Brennstoffzelle und somit des Gesamtsystems bei jedem Einsatzzyklus bewirken.

Die vorliegende Erfindung zielt daher darauf ab, die Nachteile eines derartigen bekannten reversiblen Brennstoffzellensystems zu vermeiden bzw. zumindest zu reduzieren und insbesondere im Hinblick auf die auftretenden großen Wärmeverluste als auch die Anforderungen betreffend den Platzbedarf und die Sicherheitsanforderungen für den Wasserstoffspeicher Verbesserungen zur Verfügung zu stellen und derart insbesondere die Effizienz eines derartigen reversiblen Brennstoffzellensystems zu steigern.

Zur Lösung dieser Aufgaben ist ein Verfahren zum Betreiben eines reversiblen Brennstoffzellensystems der eingangs genannten Art im wesentlichen **dadurch gekennzeichnet, dass** der Wasserstoff in einem Metallhydridspeicher gespeichert wird. Dadurch, dass erfindungsgemäß der Wasserstoff in einem Metallhydridspeicher gespeichert wird, kann aufgrund des erhöhten Speichervermögens eines derartigen Wasserstoff-Feststoffspeichers gegenüber einer Speicherung des Wasserstoffs in gasförmigem Zustand eine starke Reduktion des Platzbedarfs für einen derartigen Wasserstoffspeicher erzielt werden. Darüber hinaus sind sicherheitstechnische Auflagen für den Betrieb bzw. Einsatz eines derartigen Wasserstoffspeichers in Form eines Metallhydridspeichers bedeutend geringer im Vergleich zu einer Speicherung von Wasserstoff in einem Hochdruckbehälter. Aufgrund des verringerten Platzbedarfs als auch des verringerten technischen bzw. konstruktiven Aufwands und somit des damit verbundenen Kostenaufwands lässt sich somit erfindungsgemäß ein reversibles Brennstoffzellensystem gleicher Leistung mit gegenüber der bekannten Ausführungsform gemäß dem Stand der Technik, wie sie beispielsweise in Fig. 1 dargestellt ist, verringertem Aufwand an Platz und Kosten zur Verfügung stellen, wodurch die Effizienz eines derartigen erfindungsgemäßen Verfahrens zum Betreiben eines reversiblen Brennstoffzellensystems gegenüber dem bekannten Stand der Technik stark verbessert wird.

Zur weiteren Verbesserung der Gesamteffizienz eines derartigen Verfahrens zum Betreiben eines reversiblen Brennstoffzellensystems wird gemäß einer bevorzugten Ausführungsform vorgeschlagen, dass von der Brennstoffzelle abgegebene Wärmeenergie zum Lösen von Wasserstoff aus dem Metallhydridspeicher verwendet wird. Dadurch, dass erfindungsgemäß die von der Brennstoffzelle abgegebene Wärmeenergie zum Betrieb des Metallhydridspeichers bei der Abgabe von Wasserstoff herangezogen wird, lassen sich Wärmeverluste eines reversiblen Brennstoffzellensystems gegenüber dem bekannten Stand der Technik stark reduzieren.

Gemäß einer weiters bevorzugten Ausführungsform wird in diesem Zusammenhang vorgeschlagen, dass die zum Lösen von Wasserstoff aus dem Metallhydridspeicher erforderliche Wärmeenergie im wesentlichen vollständig von der Brennstoffzelle zur Verfügung gestellt wird, so dass im Gegensatz zum bekannten Stand der Technik nach einer beispielsweise kurzen Aufheizphase die im Gesamtsystem vorhandene Wärmemenge einen autarken Betrieb des reversiblen Brennstoffzellensystems ermöglicht, so dass Wärmeverluste, welche durch Zufuhr von Energie, beispielsweise Strom von einer externen Quelle, beim bekannten Stand der Technik ausgeglichen werden müssen, im wesentlichen vollständig vermieden werden.

Für eine besonders einfache und zuverlässige Kopplung der Komponenten des reversiblen Brennstoffzellensystems bei Durchführung des erfindungsgemäßen Verfahrens wird gemäß einer bevorzugten Ausführungsform vorgeschlagen, dass die Wärmeenergie von der Brennstoffzelle zu dem Metallhydridspeicher über einen Fluidkreislauf, über ein Wärmerohr bzw. Heat-Pipe oder eine Wärmeleitstruktur übertragen wird.

Zur weiteren Vermeidung von Wärmeverlusten und zur Erzielung einer guten Wärmekopplung bei Durchführung des erfindungsgemäßen Verfahrens wird gemäß einer weiters bevorzugten Ausführungsform vorgeschlagen, dass die Brennstoffzelle und der Metallhydridspeicher in wärmeleitendem Kontakt miteinander stehen. Durch einen derartigen im wesentlichen direkten wärmeleitenden Kontakt zwischen der Brennstoffzelle und dem Metallhydridspeicher werden Wärmeverluste praktisch vollständig vermieden.

Zur Lösung der oben genannten Aufgaben ist darüber hinaus ein reversibles Brennstoffzellensystem der eingangs genannten Art im wesentlichen **dadurch gekennzeichnet, dass** der Speicher für Wasserstoff von einem Metallhydridspeicher gebildet ist. Wie bereits oben ausgeführt, lässt sich durch Verwendung eines Metallhydridspeichers zur Speicherung von Wasserstoff eine Reduktion sowohl des Platzbedarfs als auch des technischen und konstruktiven Aufwands bei der Herstellung eines derartigen Wasserstoffspeichers erzielen, so dass insgesamt unter Berücksichtigung des verringerten Platzbedarfs und der verringerten Kosten eine Steigerung der Gesamteffizienz eines derartigen reversiblen Brennstoffzellensystems gegenüber dem bekannten Stand der Technik erzielbar ist.

Für eine weitere Verbesserung der Gesamteffizienz eines erfindungsgemäßen reversiblen Brennstoffzellensystems insbesondere unter Reduktion von Wärmeverlusten wird gemäß einer bevorzugten Ausführungsform vorgeschlagen, dass die Brennstoffzelle und der Metallhydridspeicher miteinander zur Übertragung von Wärmeenergie von der Brennstoffzelle zu dem Metallhydridspeicher gekoppelt bzw. koppelbar sind.

Für eine besonders einfache Kopplung zur Erzielung des angestrebten Wärmetransfers zwischen den einzelnen Komponenten des erfindungsgemäßen reversiblen Brennstoffzellensystems wird darüber hinaus vorgeschlagen, dass die Kopplung zwischen der Brennstoffzelle und dem Metallhydridspeicher durch einen Fluidkreislauf, ein Wärmerohr bzw. Heat-Pipe oder eine Wärmeleitstruktur gebildet ist, wie dies einer weiters bevorzugten Ausführungsform des reversiblen Brennstoffzellensystems gemäß der vorliegenden Erfindung entspricht.

Zur Verbesserung des Wärmetransfers wird darüber hinaus bevorzugt vorgeschlagen, dass die Brennstoffzelle und der Metallhydridspeicher in wärmeleitendem Kontakt miteinander angeordnet sind.

Eine derartige Kopplung zur Unterstützung des Wärmetransfers zwischen der Brennstoffzelle und dem Metallhydridspeicher kann hierbei dadurch weiter unterstützt bzw. verbessert werden, wenn gemäß einer weiters bevorzugten Ausführungsform die Brennstoffzelle wenigstens teilweise von dem Metallhydridspeicher umgeben ist.

Eine Optimierung des Wärmetransfers bzw. des Wärmehaushalts eines erfindungsgemäßen reversiblen Brennstoffzellensystems ist dadurch erzielbar, dass im Inneren des Metallhydridspeichers eine Wärmeleitstruktur vorgesehen ist, um Wärmeenergie von den Außenflächen des Metallhydridspeichers im Inneren zu verteilen, wie dies einer weiters bevorzugten Ausführungsform des reversiblen Brennstoffzellensystems entspricht.

Zur Verbesserung der Arbeitsweise des Metallhydridspeichers insbesondere bei der bei gegenüber Raumtemperatur bzw. Umgebungstemperatur erhöhten Temperatur erfolgenden Abgabe des gespeicherten Wasserstoffs wird gemäß einer weiters bevorzugten Ausführungsform vorgeschlagen, dass die interne Wärmeleitstruktur des Metallhydridspeichers aus großräumigen, gut wärmeleitenden Strukturen besteht. Gemäß einer besonders bevorzugten Ausführungsform wird dabei bevorzugt vorgeschlagen, dass die interne Wärmeleitstruktur des Metallhydridspeichers aus einem Metallschaum besteht.

Wie oben bereits mehrfach ausgeführt, lässt sich insgesamt ein reversibles Brennstoffzellensystem zur Verfügung stellen, welches bei geringem Platzbedarf und verringertem Kostenaufwand eine Verbesserung der Gesamteffizienz auch durch Verringerung bzw. weitestgehende Reduktion von Wärmeverlusten zur Verfügung stellt. Ein derartiges reversibles Brennstoffzellensystem lässt sich somit insbesondere in Vorrichtungen bzw. Einheiten einsetzen, welche über längere Zeiträume autark und oftmals unter beengten Platzanforderungen betrieben werden müssen, wobei in diesem Zusammenhang erfindungsgemäß vorgeschlagen wird, ein erfindungsgemäßes Verfahren sowie ein reversibles Brennstoffzellensystem bei einem Einsatz in einer thermisch sensiblen Anwendung, wie beispielsweise einem Satelliten oder Raumfahrzeug zu verwenden.

Die Erfindung wird nachfolgend anhand von in der beiliegenden Zeichnung schematisch dargestellten Ausführungsbeispielen näher erläutert. In dieser zeigen:
Fig. 1 eine schematische Darstellung eines reversiblen Brennstoffzellensystems gemäß dem Stand der Technik, wie dies einleitend bereits erörtert wurde;
Fig. 2 ein schematisches Diagramm eines erfindungsgemäßen reversiblen Brennstoffzellensystems zur Durchführung des erfindungsgemäßen Verfahrens; und
Fig. 3 in einer zu Fig. 1 ähnlichen Darstellung ein erfindungsgemäßes reversibles Brennstoffzellensystem zur Durchführung des erfindungsgemäßen Verfahrens.

In Fig. 2 ist schematisch eine direkte thermische Kopplung zwischen einer Brennstoffzelle 11, beispielsweise einer PEM-Brennstoffzelle (Polymerelektrolytmembran-Brennstoffzelle), und einem Metallhydridspeicher 12 zur Speicherung des Wasserstoffs dargestellt, welcher bei einer Spaltung in einem in Fig. 2 nicht näher dargestellten Elektrolyseur anfällt bzw. zur Verfügung gestellt wird. Die direkte thermische bzw. Wärmekopplung zwischen der Brennstoffzelle 11 und dem Metallhydridspeicher 12 wird durch den Pfeil 13 angedeutet, welcher einen Wärmetransfer von der Brennstoffzelle 11 zu dem Metallhydridspeicher 12 zur Verfügung stellt.

Zum Betrieb der Brennstoffzelle 11 wird bei bzw. nach entsprechender Erwärmung des Metallhydridspeichers 12 Wasserstoff entsprechend dem Pfeil 14 zur Verfügung gestellt, welcher gemeinsam mit ebenfalls der Brennstoffzelle 11 gemäß dem Pfeil 15 zur Verfügung zu stellendem Sauerstoff zur Erzeugung von elektrischer Energie herangezogen wird, wie dies durch 16 angedeutet ist.

Die Brennstoffzelle 11 wird ähnlich wie bei dem bekannten Stand der Technik gemäß Fig. 1 beispielsweise wiederum bei Temperaturen von etwa 180 °C betrieben, wodurch sich Verluste in Form von Wärme ergeben, wobei diese Wärme entsprechend dem Pfeil 13 durch die vorgesehene Kopplung zwischen der Brennstoffzelle 11 und dem Metallhydridspeicher 12 an den Metallhydridspeicher 12 abgegeben wird.

Der Metallhydridspeicher 12 wird bei Temperaturen von beispielsweise etwa 150 °C betrieben, um darin gespeicherten Wasserstoff wiederum abzugeben, so dass durch die direkte thermische Kopplung zwischen der Brennstoffzelle 11 und dem Metallhydridspeicher 12 beispielsweise nach einer kurzen Aufheizphase der in Fig. 2 schematisch dargestellte Kreislauf zum Betrieb eines reversiblen Brennstoffzellensystems im wesentlichen ohne Zufuhr von externer Energie aufrecht erhalten werden kann.

Eine thermische Kopplung zwischen der Brennstoffzelle 11 und dem Metallhydridspeicher 12, wie dies durch den Pfeil 13 angedeutet ist, kann beispielsweise über einen Fluidkreislauf, über Heat-Pipes bzw. Wärmerohre oder eine Wärmeleitstruktur vorgenommen werden.

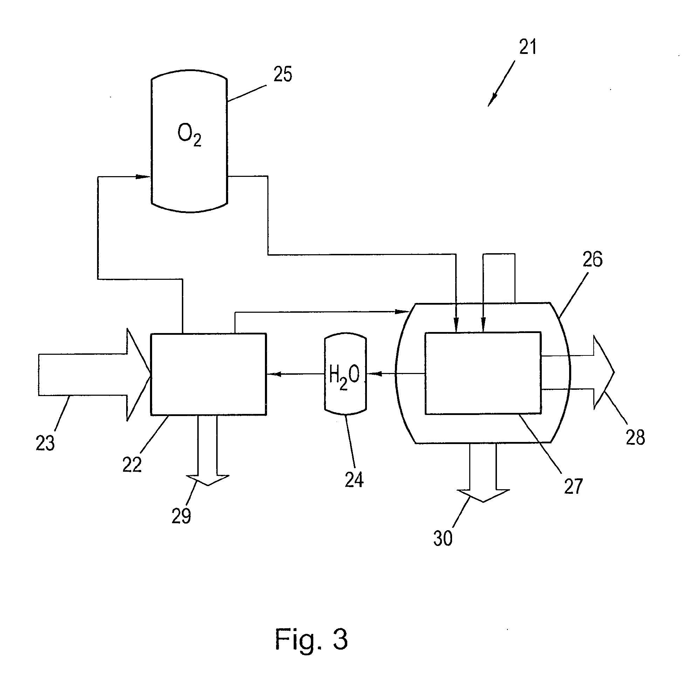

In Fig. 3 ist ähnlich zu der Darstellung gemäß Fig. 1 ein schematisch mit 21 bezeichnetes reversibles Brennstoffzellensystem dargestellt, bei welchem wiederum in einem Elektrolyseur 22 unter anfänglicher Zufuhr von externer elektrischer Energie 23 eine Spaltung von aus einem Speicher 24 zugeführtem Wasser in Sauerstoff und Wasserstoff erfolgt. Die Speicherung von Sauerstoff erfolgt in einem einen vergleichsweise geringen Platzbedarf aufweisenden Speicherbehälter 25, während die Speicherung von Wasserstoff in einem Metallhydridspeicher 26 erfolgt, welcher bei der Ausführungsform gemäß Fig. 3 eine mit 27 bezeichnete Brennstoffzelle im wesentlichen vollständig umgibt. Durch eine derartige Kopplung zwischen der Brennstoffzelle 27 und dem die Brennstoffzelle 27 umgebenden Metallhydridspeicher 26 lässt sich im wesentlichen eine vollständige Nutzung der beim Betrieb der Brennstoffzelle 27 anfallenden Wärmemenge zur Abgabe des in dem Metallhydridspeicher 26 gespeicherten Wasserstoffs für den Betrieb der Brennstoffzelle 27 erzielen.

Die Brennstoffzelle 27 liefert wiederum elektrische Energie entsprechend dem Pfeil 28 für einen externen Benutzer.

Bei der Ausführungsform gemäß Fig. 3 wird somit gegebenenfalls beim Betrieb der Brennstoffzelle 27 entstehende Wärme im Metallhydridspeicher 26 gespeichert, ohne die Umgebung signifikant zu erwärmen. Bei einem Beladevorgang des Metallhydridspeichers 26 wird diese Wärmemenge freigegeben und kann beispielsweise genutzt werden, um den ebenfalls in dem reversiblen Brennstoffzellensystem 21 integrierten Elektrolyseur 22 auf seine Arbeitstemperatur zu heizen.

Darüber hinaus lässt sich durch die Speicherung von Wasserstoff in den Metallhydridspeicher 26 eine im wesentlichen inhärente bzw. systemeigene Reinigung des Wasserstoffgases erzielen, so dass im Gegensatz zum bekannten Stand der Technik eine nachteilige Beeinträchtigung der Brennstoffzelle 27 durch gegebenenfalls geringfügige Verunreinigungen aufweisendes Wasserstoffgas reduziert und minimiert wird.

Bei dem System von Fig. 3 gegebenenfalls auftretende Wärmeverluste sind ebenso wie bei der Ausführungsform gemäß dem bekannten Stand der Technik gemäß Fig. 1 wiederum durch Pfeile 29 und 30 angedeutet, wobei der Wärmeverlust des Elektrolyseurs 22 bei vergleichbarer Leistung zu dem System von Fig. 1 wiederum beispielsweise etwa 300 W beträgt, während der gesamte Wärmeverlust der Brennstoffzelle 27 sowie des die Brennstoffzelle 27 umgebenden Metallhydridspeichers 26 beispielsweise auf weniger als 3 kW und somit weniger als die Hälfte des bekannten Systems reduziert werden kann.

Durch die Verwendung eines Metallhydridspeichers 12 bzw. 26 zur Speicherung von Wasserstoff lässt sich nicht nur der insbesondere für den Wasserstoffspeicher erforderliche Platzbedarf stark reduzieren, sondern es wird durch die direkte thermische Kopplung zwischen der Brennstoffzelle 11 bzw. 27 und dem Metallhydridspeicher 12 bzw. 26 auch sichergestellt, dass gegebenenfalls entstehende Verlustwärme während des Entladezyklus des Metallhydridspeichers 12 bzw. 27 gespeichert wird und über den gesamten Verlauf eines Lade- und Entladezyklus gleichmäßig abgegeben werden kann.

Durch den stark verringerten Platzbedarf und verringerten konstruktiven und somit auch Kostenaufwand insbesondere für den Metallhydridspeicher 12 bzw. 26 gegenüber Druckbehältern für Wasserstoff gemäß dem bekannten Stand der Technik als auch die Optimierung der anfallenden Wärmemengen lässt sich ein derartiges reversibles Brennstoffzellensystem, wie es in Fig. 2 und 3 dargestellt ist, insbesondere für thermisch sensible Anwendungen, wie beispielsweise einen Satelliten oder ein Raumfahrzeug bevorzugt verwenden, in welchen ein Einsatz über vergleichsweise lange Zeiträume ohne Verschlechterung des Wirkungsgrads und bei Aufrechterhaltung eines im wesentlichen autarken Betriebs erforderlich ist.

## Patentansprüche

1. Verfahren zum Betreiben eines reversiblen Brennstoffzellensystems, bei welchem in einem Elektrolyseur (22) Wasser in Wasserstoff und Sauerstoff gespalten und in getrennten Speichern (12, 25, 26) gespeichert wird und Wasserstoff und Sauerstoff in einer Brennstoffzelle (11, 27) unter Entstehung von Wasser in elektrische Energie (28) umgewandelt wird, **dadurch gekennzeichnet, dass** der Wasserstoff in einem Metallhydridspeicher (12, 26) gespeichert wird.

2. Verfahren nach Anspruch 1, **dadurch gekennzeichnet, dass** von der Brennstoffzelle (11, 27) abgegebene Wärmeenergie zum Lösen von Wasserstoff aus dem Metallhydridspeicher (12, 26) verwendet wird.

3. Verfahren nach Anspruch 1 oder 2, **dadurch gekennzeichnet, dass** die zum Lösen von Wasserstoff aus dem Metallhydridspeicher (12, 26) erforderliche Wärmeenergie im wesentlichen vollständig von der Brennstoffzelle (11, 27) zur Verfügung gestellt wird.

4. Verfahren nach Anspruch 1, 2 oder 3, **dadurch gekennzeichnet, dass** die Wärmeenergie von der Brennstoffzelle (11, 27) zu dem Metallhydridspeicher (12, 26) über einen Fluidkreislauf, über ein Wärmerohr bzw. Heat-Pipe oder eine Wärmeleitstruktur übertragen wird.

5. Verfahren nach einem der Ansprüche 1 bis 4, **dadurch gekennzeichnet, dass** die Brennstoffzelle (27) und der Metallhydridspeicher (26) in wärmeleitendem Kontakt miteinander stehen.

6. Reversibles Brennstoffzellensystem, bestehend aus einer Brennstoffzelle (11, 27), einem Elektrolyseur (22) und einem Speicher (12, 25, 26) für Sauerstoff und Wasserstoff, **dadurch gekennzeichnet, dass** der Speicher für Wasserstoff von einem Metallhydridspeicher (12, 26) gebildet ist.

7. Reversibles Brennstoffzellensystem nach Anspruch 6, **dadurch gekennzeichnet, dass** die Brennstoffzelle (11, 27) und der Metallhydridspeicher (12, 26) miteinander zur Übertragung von Wärmeenergie von der Brennstoffzelle (11, 27) zu dem Metallhydridspeicher (12, 26) gekoppelt bzw. koppelbar sind.

8. Reversibles Brennstoffzellensystem nach Anspruch 6 oder 7, **dadurch gekennzeichnet, dass** die Kopplung zwischen der Brennstoffzelle (11, 27) und dem Metallhydridspeicher (12, 26) durch einen Fluidkreislauf, ein Wärmerohr bzw. Heat-Pipe oder eine Wärmeleitstruktur gebildet ist.

9. Reversibles Brennstoffzellensystem nach Anspruch 6, 7 oder 8 **dadurch gekennzeichnet, dass** die Brennstoffzelle (27) und der Metallhydridspeicher (26) in wärmeleitendem Kontakt miteinander angeordnet sind.

10. Reversibles Brennstoffzellensystem nach einem der Ansprüche 6 bis 9, **dadurch gekennzeichnet, dass** die Brennstoffzelle (27) wenigstens teilweise von dem Metallhydridspeicher (26) umgeben ist.

11. Reversibles Brennstoffzellensystem nach einem der Ansprüche 6 bis 10, **dadurch gekennzeichnet, dass** im Inneren des Metallhydridspeichers (12, 26) eine Wärmeleitstruktur vorgesehen ist, um Wärmeenergie von den Außenflächen des Metallhydridspeichers im Inneren zu verteilen.

12. Reversibles Brennstoffzellensystem nach Anspruch 11, **dadurch gekennzeichnet, dass** die interne Wärmeleitstruktur des Metallhydridspeichers (12, 26) aus großräumigen, gut wärmeleitenden Strukturen besteht.

13. Reversibles Brennstoffzellensystem nach Anspruch 11 oder 12, **dadurch gekennzeichnet, dass** die interne Wärmeleitstruktur des Metallhydridspeichers (12, 26) aus einem Metallschaum besteht.

14. Verwendung eines Verfahrens nach einem der Ansprüche 1 bis 5 oder eines reversiblen Brennstoffzellensystems nach einem der Ansprüche 6 bis 13 zum Einsatz in einer thermisch sensiblen Anwendung, wie beispielsweise einem Satelliten oder Raumfahrzeug.
